# EUROPÄISCHE PATENTANMELDUNG

(11) **EP 1 901 030 A2**
(43) Veröffentlichungstag der Anmeldung: **19.03.2008**
(21) Anmeldenummer: 07017869.4
(22) Anmeldetag: 12.09.2007
(51) Int. Cl.: G01B 11/24, G01B 11/25

(54) **Messanordnung und Verfahren zum Erfassen der Oberfläche von Objekten**

(30) Priorität: 13.09.2006 DE 102006043740; 09.02.2007 DE 102007007192
(71) Anmelder: Micro-Epsilon Optronic GmbH, 01465 Dresden-Langebrück (DE)
(72) Erfinder: Stautmeister, Torsten, Dipl.-Ing., 01109 Dresden (DE); Schüller, Tobias, Dr.-Ing., 01109 Dresden (DE)
(74) Vertreter: Ullrich & Naumann

(57) **Zusammenfassung**

Eine Messanordnung zum Erfassen der Oberfläche oder Teile der Oberfläche von dreidimensional ausgedehnten Objekten (2) mittels eines optischen Sensors (4), wobei der Sensor (4) einen sich quer zu der optischen Achse (5) des Sensors (4) erstreckenden Messbereich aufweist und wobei sich das zu erfassende Objekt (3) zumindest teilweise im Messbereich des Sensors (4) befindet, ist im Hinblick auf eine möglichst kostengünstige und effiziente Erfassung der Oberfläche dadurch gekennzeichnet, dass die Messanordnung (1) eine Spiegelanordnung mit einem oder mehreren Spiegeln (9) umfasst, wobei der/die Spiegel (9) der Spiegelanordnung derart angeordnet sind, dass ein Teil des Messbereichs, der das zu erfassende Objekt (3) ungenutzt passiert, durch den/die Spiegel (9) auf die Oberfläche des zu erfassenden Objekts (3) gelenkt wird. Ein entsprechendes Verfahren, insbesondere zum Betreiben einer Messanordnung, ist angegeben.

## Beschreibung

Die Erfindung betrifft eine Messanordnung zum Erfassen der Oberfläche oder Teile der Oberfläche von dreidimensional ausgedehnten Objekten mittels eines optischen Sensors, wobei der Sensor einen sich quer zu der optischen Achse des Sensors erstreckenden Messbereich aufweist und wobei sich das zu erfassende Objekt zumindest teilweise im Messbereich des Sensors befindet. Die Erfindung betrifft ferner ein entsprechendes Verfahren.

Es besteht häufig die Notwendigkeit, die Oberfläche oder Teile der Oberfläche von Objekten zu erfassen. Dabei wird die Struktur der Oberfläche, die Farbe, der Farbverlauf oder andere Eigenschaften der Oberfläche mit einem optischen Sensor erfasst. Meist werden die Ergebnisse der Erfassung in digitale Form umgewandelt, geeignet nachbearbeitet und abgespeichert. Die Erfassung kann den verschiedensten Zwecken dienen. So kann das Bestimmen des Profils der Oberfläche, das Erkennen einzelner Strukturen auf oder in der Oberfläche, das Vermessen der Dimension des Objekts, das Erkennen von Produktionsfehlern oder dergleichen im Vordergrund stehen.

Insbesondere das Erkennen von Produktionsfehlern ist im industriellen Kontext von großer Bedeutung. Bei Erkennen eines Fehlers können fehlerhafte Teile frühzeitig in einer Fertigungskette ausgesondert oder einer Nachbearbeitung zugeführt werden, bevor die Fehler beispielsweise in späteren Fertigungsschritten zu hohen Kosten oder Produktionsausfällen führen. Problematisch bei derartigen Einsatzbedingungen ist, dass die Erfassung schnell und äußerst zuverlässig Informationen liefern muss, ohne die Fertigung zu behindern und hohe Kosten der Fertigungsanlage hervorzurufen. Beispielsweise bei der Herstellung von Rohren, Profilstäben oder Stranggut wird das Erzeugnis mit vergleichsweise hoher Geschwindigkeit an dem Sensor vorbeibewegt. Dies erfordert eine möglichst zeitgleiche Erfassung der Oberfläche an verschiedenen Stellen um den Umfang des Objekts herum.

Aus der Praxis bekannte Ansätze zur Erfassung der Oberfläche, bei denen ein Sensor entlang der Oberfläche des zu erfassenden Objekts bewegt wird und die Oberfläche sukzessive abscannt, sind in diesen Fällen nicht anwendbar. Daher besteht die Notwendigkeit, mehrere Sensoren geschickt zu platzieren, um möglichst die gesamte Oberfläche oder zumindest die interessanten Teile der Oberfläche gleichzeitig erfassen zu können. Hier werden häufig vier und mehr Sensoren um das abzutastende Objekt angeordnet und deren Messergebnisse in einer Signalverarbeitung zu einem Gesamtbild der Oberfläche des Objekts zusammengeführt. Die Anzahl der verwendeten Sensoren ist im Allgemeinen von der Komplexität der abzutastenden Oberfläche abhängig. Je komplizierter die Oberfläche ausgestaltet ist, desto mehr Sensoren werden notwendig. Da die in diesem Zusammenhang eingesetzten optischen Sensoren vergleichsweise teuer sind, entstehen erhebliche Kosten beim Aufbau der Fertigungsanlagen. Zudem muss für jeden Sensor die entsprechende Hardware zum Ansteuern des Sensors und zur Signalverarbeitung zur Verfügung stehen.

Der vorliegenden Erfindung liegt daher die Aufgabe zugrunde, eine Messanordnung der eingangs genannten Art derart auszugestalten und weiterzubilden, dass die Oberfläche oder Teile der Oberfläche von dreidimensional ausgedehnten Objekten auch bei dem Erfassen der Oberfläche über den gesamten Umfang möglichst kostengünstig und bei einfacher Konstruktion der Messanordnung erreicht werden kann. Ein entsprechendes Verfahren, insbesondere zum Betreiben einer derartigen Messanordnung, soll angegeben werden.

Erfindungsgemäß wird die voranstehende Aufgabe durch die Merkmale des Patentanspruchs 1 gelöst. Danach ist die in Rede stehende Messanordnung derart weitergebildet, dass die Messanordnung eine Spiegelanordnung mit einem oder mehreren Spiegeln umfasst, wobei der/die Spiegel der Spiegelanordnung derart angeordnet sind, dass ein Teil des Messbereichs, der das zu erfassende Objekt ungenutzt passiert, durch den/die Spiegel auf die Oberfläche des zu erfassenden Objekts gelenkt wird.

In verfahrensmäßiger Hinsicht wird die voranstehende Aufgabe durch die Merkmale des Patentanspruchs 12 gelöst. Danach ist das in Rede stehende Verfahren dadurch gekennzeichnet, dass ein Teil des Messbereichs, der das zu erfassende Objekt ungenutzt passiert, mittels einer Spiegelanordnung auf die Oberfläche des zu erfassenden Objekts gelenkt wird und dadurch nicht direkt erfassbare Teile des Objekts erfassbar werden,

In erfindungsgemäßer Weise ist zunächst erkannt worden, dass insbesondere beim Einsatz von vier und mehr Sensoren in vielen Anwendungsfällen lediglich ein geringer Teil des Messbereichs der einzelnen Sensoren quer zu deren optischer Achse genutzt wird. In erfindungsgemäßer Weise ist ferner erkannt worden, dass gerade dieser üblicherweise als negativ empfundene Effekt bei der Verbesserung der Messanordnung genutzt werden kann. Dazu sind lediglich einfache konstruktive Maßnahmen notwendig. Es wird nämlich erfindungsgemäß zu der Messanordnung eine Spiegelanordnung mit einem oder mehreren Spiegeln hinzugefügt, mit der der Teil des Messbereichs, der das zu erfassende Objekt ungenutzt passiert, nutzbar gemacht wird. Die Spiegel sind dabei derart angeordnet, dass der sonst ungenutzt passierende Teil des Messbereichs auf die Oberfläche des zu erfassenden Objekts reflektiert wird. Dadurch wird bei geeigneter Anordnung des/der Spiegel die gleichzeitige Erfassung weiterer Bereiche der Oberfläche, die sonst nicht erfassbar wären, mit nur einem Sensor ermöglicht. Dies hat zur Folge, dass auf einfachste Art und Weise die zur Erfassung einer Oberfläche oder eines gewünschten Teils einer Oberfläche notwendige Anzahl von Sensoren reduziert werden kann. Voraussetzung ist, dass der optische Sensor derart angeordnet ist, dass das zu erfassende Objekt lediglich einen Teil des Messbereichs des Sensors quer zur optischen Achse des Sensors nutzt. Dies stellt in vielen Anwendungsfällen jedoch keine echte Einschränkung dar.

Prinzipiell legt die erfindungsgemäße Messanordnung keine Einschränkungen auf, wie das Verhältnis zwischen direkt genutztem Messbereich und über die Spiegelanordnung genutztem Messbereich sein muss. In vielen Fällen wird das Verhältnis derart gewählt sein, dass im Bereich von 40 bis 70% des Messbereichs eine direkte Erfassung des Objekts durchgeführt wird. Allerdings können auch höhere und niedrigere Prozentzahlen sinnvoll sein. So kann es bei besonders ausgestalteten zu erfassenden Objekten sinnvoll sein, die Oberfläche möglichst senkrecht zu erfassen. Dies kann durch die erfindungsgemäße Messanordnung dadurch erreicht werden, dass lediglich ein sehr geringer Anteil des verfügbaren Messbereiches zur direkten Erfassung der Oberfläche genutzt wird, während ein weitaus größerer Anteil zur Erfassung der Oberfläche über die Spiegelanordnung genutzt wird.

Vorzugsweise handelt es sich bei dem in der erfindungsgemäßen Messanordnung eingesetzten Sensor um einen Abstandssensor. Dieser kann zur Erfassung von zwei- oder dreidimensionalen Daten ausgebildet sein. Vorzugsweise arbeitet der Sensor nach dem Lichtschnittverfahren, bei dem eine möglichst schmale und helle Linie auf das zu erfassende Projekt projiziert wird und der an der Oberfläche reflektierte Lichtstrahl durch ein Detektorarray detektiert wird. Aus der Verschiebung der Linie in dem detektierten Bild kann auf die dreidimensionale Beschaffenheit der Oberfläche geschlossen werden. Statt dieser so genannten Linientriangulatoren können jedoch auch andere Abstandssensoren verwendet werden. Lediglich beispielhaft sei auf konfokale, konfokal-chromatisch messende und Autofokussysteme hingewiesen. Dabei kann die Erfassung der Oberfläche sowohl punktweise als auch entlang einer beliebig gearteten Linie oder Fläche erfolgen. Gleichzeitig kann eine Erfassung sowohl mit als auch ohne Verschiebung des Sensors oder des zu erfassenden Objekts relativ zueinander erfolgen.

Der Sensor weist einen optoelektrischen Detektor auf, der als Zeilendetektor oder Matrixdetektor ausgebildet sein kann. Der Detektor kann als einfache Fotodiodenzeile ausgebildet sein, könnte jedoch auch eine CCD-Kamera umfassen. Prinzipiell sind sämtliche aus der Praxis bekannten optoelektrischen Detektoren einsetzbar.

Vorzugsweise ist eine Beleuchtungseinrichtung vorhanden, die die zu erfassende Oberfläche beleuchtet. Diese Beleuchtungseinrichtung kann durch die verschiedensten aus der Praxis bekannten Lichtquellen realisiert sein. Lediglich beispielhaft sei auf die Verwendung eines Laserlinienprojektors, eines Punktlasers, einer Halogenlampe, einer Xenonlampe oder LEDs verwiesen. Im Allgemeinen wird die Beleuchtungsquelle in Abhängigkeit des verwendeten Messverfahrens ausgewählt werden. Bei dem zuvor beschriebenen, nach dem Linienschnittverfahren arbeitenden Abstandssensor umfasst die Beleuchtungseinrichtung beispielsweise einen Linienlaserprojektor und ist integraler Bestandteil des Sensorsystems.

Der Sensor könnte bereits von sich aus einen sich quer zu seiner optischen Achse erstreckenden Messbereich aufweisen. Allerdings könnte diese Ausdehnung des Messbereichs auch durch geeignete Maßnahmen erreicht werden. Beispielhaft sei auf die Verwendung einer Linse, eines Linsensystems oder einer Umlenkvorrichtung, die beispielsweise einen die Oberfläche abtastenden Laserlichtstrahl über die Oberfläche des zu erfassenden Gegenstands führt, verwiesen. Andererseits könnte die Ausdehnung des Messbereichs auch durch Bewegung des Sensors quer zu dessen optischer Achse erzielt werden. Je nach gewünschter Geschwindigkeit, mit der die Informationen durch den Sensor gewonnen werden sollen, wird hier ein geeignetes Mittel zu wählen sein.

Zum Erreichen eines ausreichend großen Messbereichs in Richtungen längs der optischen Achse könnte dem Sensor eine geeignete Optik, beispielsweise eine telezentrische Optik, nachgeschaltet sein.

Neben einer Ausgestaltung des Sensors als Abstandssensor sind weitere Ausgestaltungen des Sensors möglich. Lediglich beispielhaft sei auf die Verwendung einer CCD-/CMOS-Kamera mit zugeordneter Beleuchtungseinrichtung verwiesen, die die Farbe und/oder Struktur des Objekts erfasst. Auch hier kann durch die erfindungsgemäße Messanordnung der gleichzeitig abtastbare Bereich der Oberfläche vergrößert werden.

Die eingesetzten Spiegel könnten die verschiedensten geometrischen Ausgestaltungen aufweisen. In der einfachsten Form ist die Oberfläche des Spiegels plan. Dadurch wird eine Rekonstruktion der Oberfläche besonders einfache erfolgen können. Allerdings könnten die Spiegel auch aus Ausschnitten aus Kugeln, Zylindern, Ellipsoiden, Hyperboloiden oder dergleichen bestehen. Die Wahl einer geeigneten Spiegeloberfläche wird im Allgemeinen von der Anwendungssituation abhängen.

Besteht die Spiegelanordnung aus mehreren Spiegeln, so müssen nicht alle Spiegel auf gleiche Art und Weise ausgeführt sein. Vielmehr ist es möglich, dass verschieden ausgestaltete Spiegel in einer Spiegelanordnung Verwendung finden.

Darüber hinaus könnte zur Lenkung des Messbereichs auf die Oberfläche auch eine Reihe von mehreren Spiegeln in Folge eingesetzt werden. Ein erster Spiegel könnte demnach den Messbereich nicht auf die Oberfläche des Objekts sondern stattdessen auf einen zweiten Spiegel lenken, Dieser könnte dann den Messbereich auf das Objekt selbst oder einen weiteren Spiegel lenken.

Die Spiegel können ebenso durch die verschiedensten reflektierenden Oberflächen gebildet sein. So können metallisierte Glasflächen ebenso Verwendung finden wie hochfein polierte Metalloberflächen. Hierzu sind prinzipiell sämtliche aus der Praxis bekannten Techniken einsetzbar.

Zum Erzielen einer möglichst flexiblen Messanordnung könnten die Spiegel bewegbar ausgestaltet sein. Diese Bewegung könnte translatorisch, rotatorisch oder als eine Kombination von beiden erfolgen. Die Rotations- und Translationsachsen können relativ beliebig orientiert sein. Durch die Bewegbarkeit der Spiegel kann die Messanordnung an das jeweils zu erfassende Objekt angepasst werden. Die Anpassung könnte auch während des Messvorgangs erfolgen. Die Bewegung der Spiegel kann dabei manuell oder automatisch erfolgen. Bei einer automatischen Verstellung der Spiegel könnte die Bewegung durch ein Steuergerät gesteuert werden. Dadurch könnte eine nachvollziehbare Veränderung der Spiegellage und Position gewährleistet werden.

Zur Erfassung des gesamten zu erfassenden Bereichs könnten die Messanordnung und das zu erfassende Objekt relativ zueinander verschiebbar ausgestaltet sein. Es ist dabei unbedeutend, ob eine Verschiebung der Messanordnung oder des Objekts vorgenommen wird. Es wäre auch eine Bewegung sowohl der Messanordnung als auch des Objekts denkbar. Auch die Richtung der Bewegung ist prinzipiell unerheblich. Hier wird der jeweilige Anwendungsfall entscheiden, welche Vorgehensweise sinnvoll ist. Es wäre zudem denkbar, dass die Messanordnung an einen Roboterarm angebracht ist und im Bedarfsfall in Richtung des zu erfassenden Objekts geschwenkt wird.

Durch die Verwendung der Spiegelanordnung zum Erfassen der Oberfläche oder Teile der Oberfläche eines Objekts enthält ein durch den Sensor gewonnenes Bild verschieden zu interpretierende Anteile. So sind Anteile vorhanden, die die Oberfläche selbst wiedergeben. Diese resultieren aus der direkten Erfassung der Oberfläche. Daneben sind jedoch auch Anteile vorhanden, deren Informationen erst nach einer Nachbearbeitung eindeutig verwendbar sind. Diese Anteile resultieren von der Erfassung der Oberfläche unter Verwendung der Spiegelanordnung. Eine der Erfassung nachfolgende Signalverarbeitung könnte diese Anteile entsprechend trennen. Handelt es sich bei dem Sensor um einen Abstandssensor, so wird sich der Wechsel zwischen den direkt und den über die Spiegelanordnung erfassten Bereichen in einem deutlichen Abstandssprung äußern. Dieser Sprung kann dann zur Trennung der Bereiche verwendet werden. Zusätzlich oder alternativ könnte Wissen über die Geometrie der Messanordnung Verwendung finden. So ist es beispielsweise möglich, dass bei der Verwendung eines Abstandssensors das zu erfassende Objekt hinter dem Spiegel erscheint. Dies äußert sich darin, dass ein größerer Abstand zwischen Sensor und Objekt bestimmt wird, als der Abstand zwischen Sensor und Spiegel zulassen würde. Ist der Abstand des Sensors von einer Spiegelfläche bekannt, kann diese Information zum Trennen der Anteile des Sensorbildes genutzt werden. Da kein Messobjekt hinter dem Spiegel erfasst werden kann, handelt es sich um einen Anteil, der über einen Spiegel erfasst wurde. Insbesondere bei der Verwendung anderer Sensoren kann eventuell die Verwendung von Wissen über das zu erfassende Objekt notwendig sein.

Vor einer Signalverarbeitung müssen die Signale des Sensors gegebenenfalls durch einen Analog-Digital-Wandler digitalisiert werden. Hierzu sind aus der Praxis die verschiedensten Verfahren bekannt. Die Signalverarbeitung selbst könnte in geeigneten Digitalrechnern vorgenommen werden. Dazu stehen ebenso sämtliche aus der Praxis bekannten Rechner zur Verfügung. Lediglich beispielhaft sei auf den Einsatz von DSPs (Digitale Signalprozessor), Mikrocontroller, FPGAs (Field Programmable Gate Array), CPLD (Complex Programmable Logic Device), ASICs (Application Specific Integrated Circuit) oder Kombinationen dieser Technologien hingewiesen. Allerdings könnte eine Signalverarbeitung auch auf einem PC mit eventuell zusätzlicher Hardware durchgeführt werden.

Aus den durch den Sensor gewonnenen und eventuell aufbereiteten Informationen könnten verschiedene Informationen über die Oberfläche des abgetasteten Objekts rekonstruiert werden. So kann beispielsweise unter Verwendung der geometrischen Ausgestaltung der Messanordnung aus einem Abstandsbild des Sensors ein Gesamtprofil der Oberfläche errechnet werden. Andererseits könnten auch die Abmessungen des Objekts oder einzelner Bereiche des Objekts bestimmt werden. Diese Abmessungen können beispielsweise die Dicke des Objekts umfassen. Ferner könnten die durch den Sensor gewonnenen Informationen dazu genutzt werden, um bestimmte Stellen an dem Objekt zu finden. Diese Stellen können beispielsweise Herstellungsfehler bei einem Objekt oder besondere Markierungen umfassen.

Ähnlich wie bei den aus der Praxis bekannten Messanordnungen zum Erfassen der Oberfläche eines Objekts kann auch die erfindungsgemäße Messanordnung mehrfach eingesetzt: werden. So kann zur Erfassung eines Objekts entlang seines Umfangs die Messanordnung mehrfach eingesetzt werden. Im Gegensatz zu den aus der Praxis bekannten Anordnungen ist durch den vergrößerten durch einen Sensor gleichzeitig erfassbaren Bereich auf der Oberfläche die Zahl der benötigten Sensoren erheblich reduzierbar. Durch die Reduzierung der benötigten Sensoren reduziert sich auch die Anzahl der benötigten Steuergeräte zum Ansteuern der einzelnen Sensoren sowie der notwendigen Zusatzgeräte wie beispielsweise Analog-Digital-Wandler. Auch die Signalnachbearbeitung kann rationeller und günstiger erfolgen. Durch all diese Effekte reduziert sich verständlicherweise auch die Baugröße der gesamten Anordnung, wodurch die Anordnung beispielsweise wesentlich einfacher in eine Fertigungsanlage einbaubar wird.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 12 jeweils nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine erfindungsgemäße Messanordnung zum Erfassen von Teilen der Oberfläche eines Objekts und
- Fig. 2: eine paarweise Verwendung einer Messanordnung gemäß Fig. 1 zur Erfassung der Oberfläche eines Objekts über dessen gesamten Umfang.

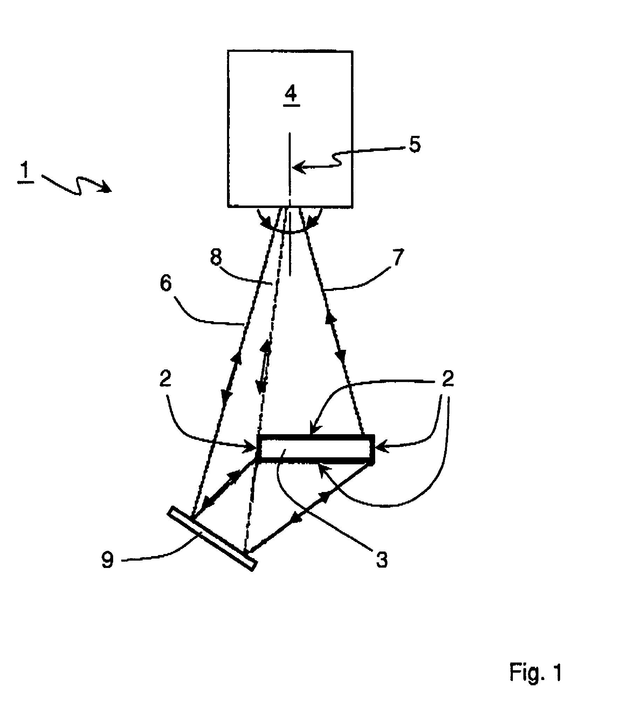

Fig. 1 zeigt eine erfindungsgemäße Messanordnung 1 zur Erfassung der Oberfläche 2 eines Objekts 3 mittels eines Sensors 4. Der Sensor 4 weist einen sich quer zu dessen optischer Achse 5 erstreckenden Messbereich auf, dessen Randstrahlen durch die Lichtstrahlen 6 und 7 gegeben sind. Ein weiterer Lichtstrahl 8 in dem Messbereich ist in Fig. 1 zwischen den Randstrahlen 6, 7 dargestellt. Lichtstrahl 8 charakterisiert den Lichtstrahl, der gerade noch das Objekt 3 passiert. Die zwischen den Lichtstrahlen 7 und 8 gelegenen Beleuchtungsstrahlen werden durch die Oberfläche 2 des Objekts 3 reflektiert und treffen in einen Detektor des Sensors 4. Diese Lichtstrahlen dienen also der direkten Erfassung der Oberfläche. Die Lichtstrahlen zwischen den Lichtstrahlen 6 und 8 passieren das Objekt 3 und wären bei aus dem Stand der Technik bekannten Messanordnungen ungenutzt verloren. In der erfindungsgemäßen Messanordnung ist ein Spiegel 9 vorgesehen, der die passierenden Lichtstrahlen wieder zurück auf das Objekt 3 lenkt. Diese Beleuchtungslichtstrahlen werden dann von der Oberfläche 2 des Objekts 3 reflektiert und erneut über Spiegel 9 reflektiert. Von hier gelangen sie in den Detektor des Sensors 4. Die zwischen den Lichtstrahlen 6 und 8 gelegenen Lichtstrahlen dienen also zur indirekten Erfassung der Oberfläche.

Fig. 1 lässt deutlich erkennen, dass durch die erfindungsgemäße Messanordnung zum einen der nicht genutzte Messbereich des Sensors nutzbar wird. Zum anderen wird die sonst nicht erfassbare Unterseite des Objekts 3 erfassbar. Aus den derart gewonnenen Informationen können Eigenschaften der Oberfläche 2 des Objekts 3 rekonstruiert werden. So kann, wenn es sich bei dem verwendeten Sensor 4 um einen Abstandssensor handelt, das Profil der Oberseite und Unterseite des Objekts 3 rekonstruiert werden. Andererseits kann aus den durch den Sensor 4 gewonnenen Informationen die Dicke d des Objekts 3 bestimmt werden.

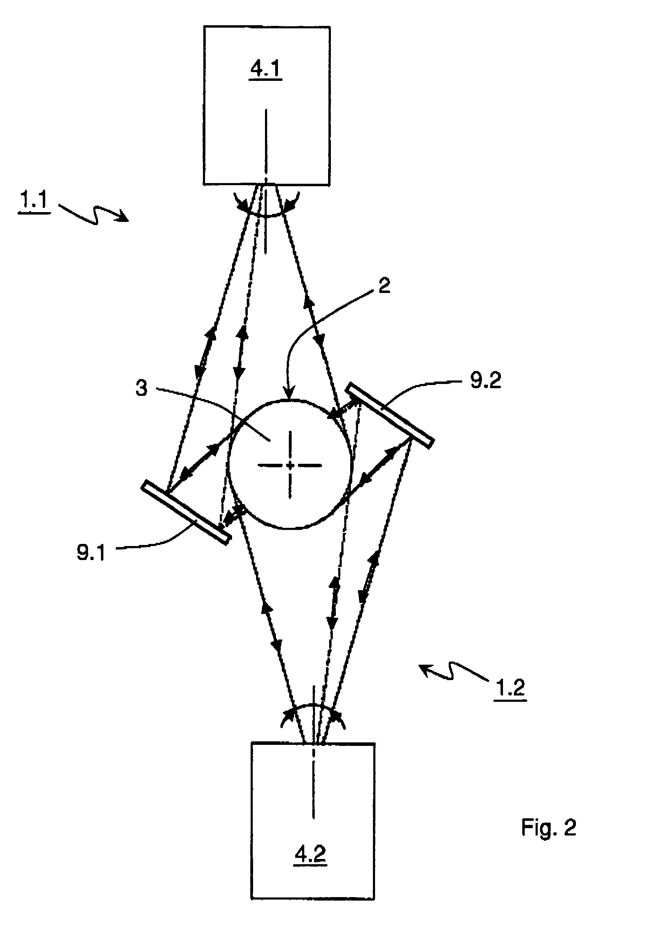

Fig. 2 zeigt die Erfassung der Oberfläche 2 eines Objekts 3 über dessen gesamten Umfang. Das erfasste Objekt 3 kann beispielsweise ein Rohr sein, das nach der Fertigung untersucht werden soll und sich senkrecht zur Zeichenebene in Fig. 2 bewegt. Dazu wird die Messanordnung gemäß Fig. 1 in zweifacher Ausführung eingesetzt, wobei die beiden Messanordnungen um 180° gedreht sind. Ein Sensor 4.1 bzw. 4.2 beleuchtet wiederum die Oberfläche 2 eines Objekts 3. Die Lichtstrahlen beleuchten zu einem Teil das Objekt 3 direkt, zu einem anderen Teil werden sie über einen Spiegel 9.1 bzw. 9.2 auf die Oberfläche 2 des Objekts 3 gelenkt.

Fig. 2 zeigt deutlich, dass durch die Verwendung der erfindungsgemäßen Messanordnung die Oberfläche 2 des Objekts 3 über den gesamten Umfang erfassbar ist. Im Gegensatz zu der Verwendung üblicher Messanordnungen kann durch die erfindungsgemäße Messanordnung die Anzahl der verwendeten Sensoren auf zwei reduziert werden. Dennoch ist der gesamte Umfang des Objekts 3 erfassbar.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Messanordnung
- 2: Oberfläche des Objekts
- 3: zu vermessendes Objekt
- 4: optischer Sensor
- 5: optische Achse des Sensors
- 6: Randstrahl des Messbereichs
- 7: Randstrahl des Messbereichs
- 8: Lichtstrahl
- 9: Spiegel

## Patentansprüche

1. Messanordnung zum Erfassen der Oberfläche oder Teile der Oberfläche von dreidimensional ausgedehnten Objekten (3) mittels eines optischen Sensors (4), wobei der Sensor (4) einen sich quer zu der optischen Achse (5) des Sensors (4) erstreckenden Messbereich aufweist und wobei sich das zu erfassende Objekt (3) zumindest teilweise im Messbereich des Sensors (4) befindet,
**dadurch gekennzeichnet, dass** die Messanordnung (1) eine Spiegelanordnung mit einem oder mehreren Spiegeln (9) umfasst, wobei der/die Spiegel (9) der Spiegelanordnung derart angeordnet sind, dass ein Teil des Messbereichs, der das zu erfassende Objekt (3) ungenutzt passiert, durch den/die Spiegel (9) auf die Oberfläche (2) des zu erfassenden Objekts (3) gelenkt wird.

2. Messanordnung nach Anspruch 1, **dadurch gekennzeichnet, dass** der Sensor (4) einen Abstandssensor umfasst, wobei
der Sensor (4) vorzugsweise nach den Linienschnittverfahren arbeitet.

3. Messanordnung nach einem der Ansprüche 1 oder 2, **dadurch gekennzeichnet, dass** der Sensor (4) einen optoelektrischen Detektor umfasst.

4. Messanordnung nach einem der Ansprüche 1 bis 3, **dadurch gekennzeichnet, dass** zur Erzeugung oder Vergrößerung des Messbereichs quer zur optischen Achse (5) des Sensors (4) eine Umlenkvorrichtung vorgesehen ist und/oder der Sensor (4) quer zur optischen Achse (5) bewegbar ist.

5. Messanordnung nach einem der Ansprüche 1 bis 4, **dadurch gekennzeichnet, dass** die Messanordnung (1) eine Beleuchtungseinrichtung umfasst.

6. Messanordnung nach einem der Ansprüche 1 bis 5, **dadurch gekennzeichnet, dass** der/die Spiegel (9) plan oder als Ausschnitt einer Kugel, eines Zylinders oder eines Ellipsoiden ausgebildet ist und/oder
dass der/die Spiegel (9) bewegbar ausgestaltet ist/sind, wobei
die Bewegung des/der Spiegel (9) durch eine Steuereinheit steuerbar sein kann und/oder
dass Teile des über Spiegel gelenkten Messbereichs über mehrere Spiegel lenkbar sind.

7. Messanordnung nach einem der Ansprüche 1 bis 6, **dadurch gekennzeichnet, dass** zur Trennung des Messbereichs des Sensors (4) quer zur optischen Achse (5) in Bereiche mit direkter Abtastung und Bereiche mit indirekter Abtastung der Oberfläche des Objekts (3) eine Signalverarbeitung in einer Auswerteeinheit vorgesehen ist.

8. Verfahren zum Erfassen der Oberfläche oder Teile der Oberfläche von dreidimensional ausgedehnten Objekten (3) mittels eines optischen Sensors (4), insbesondere zum Betreiben einer Messanordnung nach einem der Ansprüche 1 bis 7, wobei der Sensor (4) einen sich quer zu der optischen Achse (5) des Sensors (4) erstreckenden Messbereich aufweist und wobei sich das zu erfassende Objekt (3) zumindest teilweise im Messbereich des Sensors (4) befindet,
**dadurch gekennzeichnet, dass** ein Teil des Messbereichs, der das zu erfassende Objekt (3) ungenutzt passiert, mittels einer Spiegelanordnung auf die Oberfläche des zu erfassenden Objekts (3) gelenkt wird und **dadurch** nicht direkt erfassbare Teile des Objekts erfassbar werden.

9. Verfahren nach Anspruch 8, **dadurch gekennzeichnet, dass** die Position und die Lage des/der Spiegel (9) der Spiegelanordnung in Abhängigkeit des zu erfassenden Objekts (3) eingestellt werden, wobei
die Einstellung der Position und/oder Lage des/der Spiegel (9) der Spiegelanordnung manuell oder elektrisch gesteuert durchgeführt werden kann.

10. Verfahren nach einem der Ansprüche 8 oder 9, **dadurch gekennzeichnet, dass** die durch den Sensor (4) gewonnenen Informationen in einer Signalverarbeitung aufbereitet werden, wobei
durch die Signalverarbeitung das Profil der Oberfläche (2) des abgetasteten Objekts (3) rekonstruiert wird und/oder wobei
durch die Signalverarbeitung Informationen über die Abmessungen des Objekts (3), insbesondere dessen Dicke, bestimmt werden.
